# EUROPEAN PATENT APPLICATION

(11) **EP 4 387 086 A1**
(43) Date of publication of application: **19.06.2024**
(21) Application number: 21955319.5
(22) Date of filing: 30.08.2021
(51) Int. Cl.: H02S 40/22, H02S 40/44

(54) **SOLAR ENERGY UTILIZATION UNIT AND COMBINED STRUCTURE THEREOF**

(71) Applicant: Bolymedia Holdings Co. Ltd., Santa Clara, California 95051 (US)
(72) Inventor: HU, Xiaoping, Shenzhen, Guangdong 518109 (CN)
(74) Representative: Manitz Finsterwald Patent- und Rechtsanwaltspartnerschaft mbB
(86) International application number: PCT/CN2021/115242
(87) International publication number: WO 2023/028735

(57) **Abstract**

A solar energy utilization unit and a combined formation thereof. The solar energy utilization unit comprises a light energy utilization device (100), a liquid light concentration device (200) and a reflection structure (300). The liquid light concentration device (200) has an accommodating chamber filled with a transparent liquid (201). The liquid light concentration device (200) forms a structure capable of transmitting and/or totally reflecting sunlight to a first light energy utilization portion (110) of the light energy utilization device (100). A light reflection chamber (310) is formed between the reflection structure (300), a second light energy utilization portion (120) and the liquid light concentration device (200). The reflection structure (300) is capable of reflecting sunlight entering the light reflection chamber (310) to the second light energy utilization portion (120). The configuration enables sunlight to be absorbed and utilized from both sides of the first light energy utilization portion (110) and the second light energy utilization portion (120) of the light energy utilization device (100) which face away from each other, thereby improving the concentration and utilization efficiency of sunlight.

## Description

### TECHNICAL FIELD

The present disclosure relates to structures for conversion and utilization of light energy.

### BACKGROUND OF THE INVENTION

Solar energy utilization devices are used to recycle solar energy, such as using photovoltaic panels for solar power generation. With the reduction of the cost and increase of the efficiency of photovoltaic panels, solar energy utilization devices are being used increasingly. However, currently used concentrating solar energy devices of low concentration ratio can be further improved in the concentration efficiency of solar energy.

### SUMMARY OF THE INVENTION

The present disclosure mainly provides a new type of solar energy utilization unit and combined formation thereof to demonstrate a new type of solar energy utilization structure.

Accordingly, a solar energy utilization unit provided in some embodiments of the present disclosure may include:
a light energy utilization member having a first light energy utilization portion and a second light energy utilization portion that are arranged opposite to each other and are capable of receiving, converting and utilizing solar light;
a liquid light concentration member having an accommodating chamber that is filled with transparent liquid and has a transparent wall through which the sunlight is allowed to be transmitted into the transparent liquid, the light energy utilization member being arranged inside or outside the accommodating chamber, or formed as a wall of the accommodating chamber, the first light energy utilization portion being arranged and faced towards the liquid light concentration member or the transparent liquid, and the liquid light concentration member forming a structure capable of transmitting and/or fully reflecting the sunlight to the first light energy utilization portion; and
a reflection structure, wherein a light inlet is left between the reflection structure and the liquid light concentration member for the sunlight to enter, a light reflection chamber is formed among the reflection structure, the second light energy utilization portion and the liquid light concentration member, the light inlet is communicated with the light reflection chamber, and the reflection structure is capable of reflecting the sunlight entered into the light reflection chamber onto the second light energy utilization portion.

In some embodiments, the light reflection chamber may be arranged on at least one side of the liquid light concentration member and the light energy utilization member and below the second light energy utilization portion.

In some embodiments, the reflection structure is a groove like structure, in which the light energy utilization member and the liquid light concentration member may be arranged, and the groove like structure may have an internal reflective surface so as to reflect sunlight onto the second light energy utilization portion.

In some embodiments, a side wall of the groove like structure may be coincided with a portion of a wall of the liquid light concentration member, and a side wall on the opposite side may be separated from the liquid light concentration member so as to form the light reflection chamber.

In some embodiments, the portion of the wall may be a transparent wall.

In some embodiments, the opposite side walls of the groove like structure may be both separated from the liquid light concentration member so as to form the light reflection chamber.

In some embodiments, the wall of the liquid light concentration member facing the light reflection chamber may be a transparent wall, a single-sided reflection wall, or a double-sided reflection wall.

In some embodiments, the liquid light concentration member may be a structure with a wide top and a narrow bottom, and at least of its top wall may be a transparent wall so that the sunlight can be transmitted from the top wall into the transparent liquid.

In some embodiments, the unit may further comprises a transparent cover plate, wherein the transparent cover plate and the reflection structure and/or the liquid light concentration member may form a closed structure, in which the light energy utilization member may be arranged.

In some embodiments, the light energy utilization member, the liquid light concentration member and the reflection structure may be extended in an identical direction, forming a strip like structure.

Also, a combined formation formed by the solar energy utilization units may be provided in some embodiments of the present disclosure. The combined formation may include at least two the solar energy utilization units as mentioned aforesaid.

In some embodiments, the solar energy utilization units may be arranged side by side, a cavity may be formed between adjacent solar energy utilization units, and a thermal utilization working medium, a charging battery and/or a control circuit board may be arranged in the cavity.

In some embodiments, the solar energy utilization units may be arranged side by side, the reflection structures of at least two adjacent solar energy utilization units may be connected and may form a cavity together with two adjacent liquid light concentration members, the cavity may be provided with a second liquid light concentration member and a second light energy utilization member, the second light energy utilization member may have a first light energy utilization portion and a second light energy utilization portion that are arranged apart from each other, the first light energy utilization portion of the second light energy utilization member may be arranged upwards so as to receive sunlight from above transmitted thereto, the second liquid light concentration member may be arranged below the second light energy utilization member, and the second light energy utilization portion of the second light energy utilization member may be faced towards the second liquid light concentration member or served as the wall of the second liquid light concentration member so as to receive sunlight concentrated from the second liquid light concentration member.

In some embodiments, the second liquid light concentration member may be wide on the top and narrow on the bottom, wherein the narrow lower part of the second liquid light concentration member may be connected to the reflection structures of two adjacent solar energy utilization units so as to form respective light reflection chambers together with the two adjacent solar energy utilization units.

In some embodiments, there may be a gap left between the wall of the second liquid light concentration member and adjacent liquid light concentration members on both sides thereof, so as to extend the region of the light reflection chamber to the gap.

In some embodiments, the wall of the second liquid light concentration member facing towards the liquid light concentration members on both sides thereof may be at least partially a transparent wall.

In some embodiments, the second liquid light concentration member and adjacent liquid light concentration members on both side thereof may share a wall or their walls may be coincided, the shared or coincided wall may be a transparent wall or a double-sided reflection wall.

In some embodiments, the wall of the second liquid light concentration member and the solar energy utilization units on both sides thereof may form the light reflection chambers, respectively, and at least a portion of the wall of the second liquid light concentration member facing the light reflection chambers may be a transparent wall.

In some embodiments, the second liquid light concentration member and the reflection structures of the solar energy utilization units on both sides thereof may be communicated through thermal conduction.

In some embodiments, the liquid light concentration members of adjacent solar energy utilization units may be separated from each other to form independent chambers or may be communicated to be one chamber.

According to the solar energy utilization unit including the light energy utilization member, the liquid light concentration member, and the reflection structure mentioned in aforesaid embodiments, the light energy utilization member has a first light energy utilization portion and a second light energy utilization portion that are arranged oppositely and are capable of receiving, converting and utilizing sunlight; the liquid light concentration member has an accommodating chamber in which the transparent liquid is filled, the light energy utilization member is arranged inside or outside the accommodating chamber or formed as a wall of the accommodating chamber, the first light energy utilization portion is arranged and faced towards the liquid light concentration member or the transparent liquid, so that the liquid light concentration member can be formed as a structure capable of transmitting and/or fully reflecting sunlight to the first light energy utilization portion; a light inlet is left between the reflection structure and the liquid light concentration member for sunlight to enter, a light reflection chamber is formed among the reflection structure, the second light energy utilization portion and the liquid light concentration member, and the light inlet and the light reflection chamber are communicated, so that the reflection structure can reflect the sunlight entered into the light reflection chamber onto the second light energy utilization portion. With such configuration, sunlight can be absorbed and utilized at both sides of the first light energy utilization portion and the second light energy utilization portion of the light energy utilization member that are faced away from each other, thereby improving the concentration and utilization efficiency of the sunlight.

### Brief Description of the Drawings

FIG. 1 is a schematically diagram of a vertical section of a solar energy utilization unit in some embodiments of the present disclosure;
FIG. 2 is a schematically diagram of a vertical section of a combined formation formed by solar energy utilization units in some embodiments of the present disclosure;
FIG. 3 is a schematically diagram of a vertical section of a combined formation formed by solar energy utilization units in some embodiments of the present disclosure;
FIG. 4 is a schematically diagram of a vertical section of a combined formation formed by solar energy utilization units in some embodiments of the present disclosure;
FIG. 5 is a schematically diagram of a vertical section of a combined formation formed by solar energy utilization units in some embodiments of the present disclosure;

### Detailed Description

The present disclosure will be further described in detail below through specific embodiments with reference to the accompanying drawings. Common or similar elements are referenced with like or identical reference numerals in different embodiments. Many details described in the following embodiments are for better understanding the present disclosure. However, those skilled in the art can realize with minimal effort that some of these features can be omitted in different cases or be replaced by other elements, materials and methods. For clarity some operations related to the present disclosure are not shown or illustrated herein so as to prevent the core from being overwhelmed by excessive descriptions. For those skilled in the art, such operations are not necessary to be explained in detail, and they can fully understand the related operations according to the description in the specification and the general technical knowledge in the art.

In addition, the features, operations or characteristics described in the specification may be combined in any suitable manner to form various embodiments. At the same time, the steps or actions in the described method can also be sequentially changed or adjusted in a manner that can be apparent to those skilled in the art. Therefore, the various sequences in the specification and the drawings are only for the purpose of describing a particular embodiment, and are not intended to be an order of necessity, unless otherwise stated one of the sequences must be followed.

The serial numbers of components herein, such as "first", "second", etc., are only used to distinguish the described objects and do not have any order or technical meaning. The terms "connected", "coupled" and the like here include direct and indirect connections (coupling) unless otherwise specified.

The positional relationships, such as up and down, herein are relative and do not have absolute significance.

A solar energy utilization unit in some embodiments of the present disclosure can be used for receiving and utilizing sunlight for energy conversion, such as converting the sunlight into electrical energy, thermal energy and other forms of energy, for human use. Meanwhile, a combined formation that combines a plurality of solar energy utilization units for use is also provided in some embodiments to further improve the efficiency of concentration and utilization of solar energy through combination.

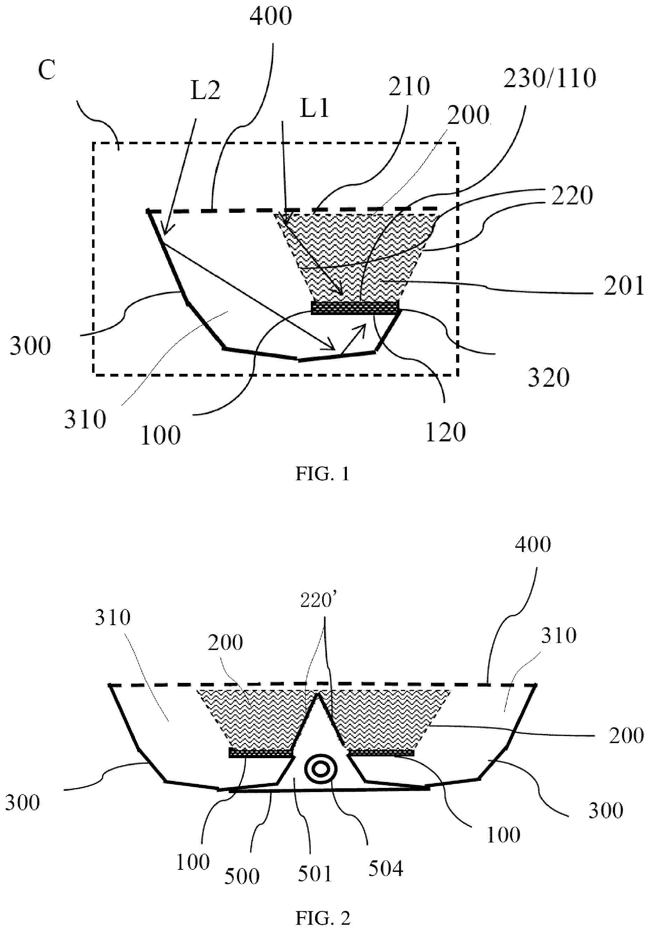

Referring to FIGs. 1-5, the solar energy utilization unit C shown in some embodiments may include a light energy utilization member 100, a liquid light concentration member 200 and a reflection structure 300.

The light energy utilization member 100 may include a first light energy utilization portion 110 and a second light energy utilization portion 120 that are arranged apart from each other and are capable of receiving, converting and utilizing sunlight. In some embodiments, the light energy utilization member 100 may be one or more of a double-sided photovoltaic panel, a photothermal utilization device, a comprehensive utilization device for photoelectric and thermal energy, or a concentrated light energy utilization device. The photovoltaic panel may generally refer to any device that directly converts light energy into electrical energy, including various semiconductor photovoltaic panels, photovoltaic thin films, quantum dot optoelectronic converter devices, etc.. In other embodiments, the first light energy utilization portion 110 and the second light energy utilization portion 120 may be in other forms of solar energy utilization structures.

The liquid light concentration member 200 may include an accommodating chamber filled with transparent liquid 201. Part or all of walls of the accommodating chamber may be a transparent wall (for example, they may include one or more of a transparent side wall 220, a transparent top wall 210 and a transparent bottom wall230), and sunlight can be transmitted into the transparent liquid 201 through the transparent wall. The liquid light concentration member 200 can form a structure capable of transmitting and/or fully reflecting the sunlight to the first light energy utilization portion 110; that is, the sunlight entered into the transparent liquid 201 can be directly transmitted from the transparent liquid 201 to the first light energy utilization portion 110, or it can also be finally reflected to the first light energy utilization portion 110 by the phenomenon of total reflection produced from the transparent liquid 201 and the transparent wall. Alternatively, the sunlight can be reflected to the first light energy utilization portion 110 by some reflection walls. To achieve the phenomenon of total reflection, the structure of the liquid light concentration member 200 may be configured as follows: the sunlight from the transparent liquid 201 to the transparent wall in a certain angle can form the phenomenon of total reflection (also referred to as total internal reflection), that is, the sunlight from the certain angle will not be transmitted from the transparent wall, instead, it will continue to propagate within the liquid light concentration member 200 under the effect of total reflection and ultimately concentrated onto the first light energy utilization portion 110. For a specific design, sunlight from the transparent liquid 201 to the transparent wall in other angles may be transmitted onto the reflection structure 300, where it is concentrated to the second light energy utilization portion 120 of the light energy utilization member 100. When this transmission is undesired, the corresponding wall may be configured as a single-sided or double-sided reflection wall to prevent sunlight from being transmitted from the wall beyond the liquid light concentration member 200.

Referring to FIGs. 1-5, the accommodating chamber may include a transparent top wall 210, a transparent side wall 220 and a transparent bottom wall 230 in some embodiments. The transparent side wall 220 may be inclined; and the sunlight in the transparent liquid 201 can be transmitted from the transparent side wall 220 to the reflection structure 300 or be fully reflected onto the first light energy utilization portion 110 of the light energy utilization member 100. The liquid light concentration member 200 with the inclined transparent side wall 220 can adapt to incident light with a larger deflection angle, accordingly, it can be used not only to cope with the north-south deflection of sunlight, but also to cope with the east-west deflection of sunlight. In some embodiments, the transparent side wall 220 may be formed by one or more of flat surface(s), folded surface(s) and curved surface(s). In other embodiments, at least a portion of the transparent side wall 220 may also be configured by a single-sided or double-sided reflective surface. The transparent side wall 220 herein can play both the role of light transmission and the role of total reflection. The liquid light concentration member 200 can concentrate more sunlight onto the first light energy utilization portion 110 under the same conditions compared with prior art, thereby increasing the concentration ratio of the unit.

The light energy utilization member 100 may be arranged inside the accommodating chamber, outside the accommodating chamber, or formed as a wall of the accommodating chamber; and the first light energy utilization portion 110 may be arranged and faced towards the liquid light concentration member 200 or the transparent liquid 201. At least a part of the sunlight in the accommodating chamber transmitted from transparent liquid 201 to the transparent wall may generate the phenomenon of total reflection, so as to concentrate the sunlight onto the first light energy utilization portion 110.

Specifically, the light energy utilization member 100 may be arranged on the outer side of the liquid light concentration member 200, and the first light energy utilization portion 110 may be attached onto the liquid light concentration member 200, so that the sunlight in the liquid light concentration member 200 can be concentrated onto the first light energy utilization portion 110. Alternatively, the first light energy utilization portion 110 may be directly arranged in the accommodating chamber; or, the first light energy utilization portion 110 may form as a part of the wall of the liquid light concentration member 200. The liquid light concentration member 600 and the light energy utilization member 700 described below may also be arranged by using the aforesaid arrangement.

Specifically, in some embodiments, referring to FIGs. 1-5, the liquid light concentration member 200 may have a transparent bottom wall 220 made of transparent material; and the first light energy utilization portion 110 may be adhered to the outer side of the transparent bottom wall 220. For example, the first light energy utilization portion 110 is fixedly connected to the outer side of the liquid light concentration member 200. In the liquid light concentration member 200, sunlight may be converged onto the first light energy utilization portion 110.

In some embodiments, the light energy utilization member 100 may be directly immersed in the transparent liquid 201, and the first light energy utilization portion 110 may directly receive sunlight transmitted from the transparent liquid 201.

In some embodiments, the first light energy utilization portion 110 may be a part of the liquid light concentration member 200; wherein the outer wall of the first light energy utilization portion 110 (a side used for receiving sunlight) may be connected directly or indirectly to the transparent side wall 220, forming the bottom wall of the accommodating chamber.

Part or all internal space of the liquid light concentration member 200 (or a second liquid light concentration member 600) may be filled with transparent liquid 201. Preferably, in some embodiments, the transparent liquid 201 may basically fill the entire accommodating chamber to achieve a better result. In such embodiments, the transparent liquid 201 may be used as a light propagation medium. In some embodiments, the transparent liquid 201 may be deionized pure water, glycerol, alcohol, ethylene glycol, or a mixture thereof. The liquid light concentration member 200 and the second liquid light concentration member 600 may use the same or different transparent liquid to achieve different effects.

In addition, the transparent liquid 201 may directly or indirectly form a heat transfer structure with the first light energy utilization portion 110 and the second light energy utilization portion 120, thereby cooling or absorbing heat from the first light energy utilization portion 110 and the second light energy utilization portion 120, and improving the utilization efficiency of light energy.

Furthermore, referring to FIGs. 1-5, there is a light inlet left between the reflection structure 300 and the liquid light concentration member 200 for sunlight to enter; and a light reflection chamber 310 communicated with the light inlet may be formed among the reflection structure 300, the second light energy utilization portion 120 and the liquid light concentration member 200. The wall of the liquid light concentration member 200 facing the light reflection chamber 310 may be a transparent wall, or a single-sided or double-sided reflection wall facing the transparent liquid 201 or the light reflection chamber 310. Sunlight may be transmitted into the light reflection chamber 310 through the light inlet; and in some embodiments, the sunlight may also be transmitted into the light reflection chamber 310 from the transparent wall of the liquid light concentration member 200 (e.g. the transparent side wall 220 or other transparent walls). The reflection structure 300 can reflect the sunlight entered into the light reflection chamber 310 onto the second light energy utilization portion 120, thereby allowing more sunlight to be absorbed and utilized by the second light energy utilization portion 120.

The light reflection chamber 310 may be arranged on at least one side of the liquid light concentration member 200 and the light energy utilization member 100, as well as below the second light energy utilization portion 120, thereby better concentrating sunlight towards the second light energy utilization portion 120. For example, it may be arranged around the liquid light concentration member 200 and the light energy utilization member 100, or it may be arranged only on one or more sides of the liquid light concentration member 200 and the light energy utilization member 100, so as to receive sunlight shining on these areas; and some sunlight outside the receiving range of the liquid light concentration member 200 may be reflected onto the second light energy utilization portion 120 of the light energy utilization member 100 and the liquid light concentration member 200, improving the concentration efficiency of the light energy utilization member 100.

Referring to FIGs. 1-5, in some embodiments, the reflection structure 300 may be arranged on the outer side and bottom of the liquid light concentration member 200, for example, on one or more sides of the liquid light concentration member 200. The reflection structure 300 may have a reflective surface which may adopt a structure capable of reflecting sunlight, such as a reflective Fresnel lens, a reflective mirror surface, or a high reflective coating. The reflection structure 300 can not only converge sunlight directly to the second light energy utilization portion 120, but also converge sunlight towards the liquid light concentration member 200. Especially, when the wall of the liquid light concentration member 200 facing the light reflection chamber 310 is a transparent wall (such as the transparent side wall 220), the reflection structure 300 can also increase the range of sunlight received by the liquid light concentration member 200, and can concentrate more sunlight to shine on the liquid light concentration member 200. For example, the sunlight may be reflected by the reflection structure 300 onto the transparent side wall 220 of the liquid light concentration member 200 and ultimately guided to the first light energy utilization portion 110. Even if the sunlight passes through the liquid light concentration member 200, it is more easily reflected by the reflection structure 300 to the second light energy utilization portion 120 of the light energy utilization member 100 due to being refracted by the transparent liquid.

The reflection structure 300 may adopt any feasible structure to achieve the above functions and effects. Referring to FIGs. 1-5, in some embodiments, the reflection structure 300 may be in a groove like structure, in which the light energy utilization member 100 and the liquid light concentration member 200 may be arranged. The groove like structure may have an internal reflective surface to reflect sunlight onto the second light energy utilization portion 120.

As shown in FIG. 1, in some embodiments, one side wall of the reflection structure 300 of the groove like structure may be coincided with a portion of the wall of the liquid light concentration member 200 (as shown in the right side wall of the liquid light concentration member 200), and the other opposite side wall may be separated from the liquid light concentration member 200 to form the light reflection chamber 310. This structure makes the entire solar energy utilization unit more compact. Moreover, in some embodiments, when the portion of the wall (as shown in the right side wall of the liquid light concentration member 200) is a transparent wall, it can also receive sunlight transmitted from this side (as shown on the right side).

In some embodiments, the two opposite side walls of the groove like structure may be separated from the liquid light concentration member 200 to form the light reflection chamber 310, that is, the light reflection chamber 310 may be arranged at least on the opposite sides of the liquid light concentration member 200, which expands the coverage area of the light reflection chamber 310 to allow more sunlight to enter the light reflection chamber 310.

Furthermore, the liquid light concentration member 200 may be of a regular or irregular shape to primarily achieve the above functions and effects. Considering that sunlight enters from above, in order to receive more sunlight, the liquid light concentration member 200 may be a structure with a wide top and a narrow bottom, and at least the top wall of the liquid light concentration member 200 may be a transparent wall so that sunlight can be transmitted from the top wall to the transparent liquid 201.

In some embodiments, referring to FIGs. 1-5, the vertical section of the liquid light concentration member 200 may be wedge-shaped, and the top wall 210 may be greater than the bottom wall 230 to achieve the concentration effect. Of course, this shape is only an example, and other shapes may also be used, such as inverted triangle, basin shape, and so on.

Furthermore, in order to prevent dust and facilitate cleaning, a transparent cover plate 400 may also be included, wherein a closed structure may be formed by the transparent cover plate and the reflection structure 300 and/or the liquid light concentration member 200. The light energy utilization member 100 may be arranged in the closed structure. Referring to FIGs. 1-5, in some embodiments, the transparent cover plate 400 may enclose the reflection structure 300, forming into the closed structure. The transparent cover plate 400 may be a Fresnel lens surface or other transparent structure.

Furthermore, in order to expand the receiving range of sunlight, the light energy utilization member 100, the liquid light concentration member 200 and the reflection structure 300 may be extended in the same direction to form a strip like structure in some embodiments. For example, the vertical section shown in FIGs. 1-5 may be extended along a direction perpendicular to the plane of the figures, forming a strip like structure.

On the other hand, a combined formation formed by the solar energy utilization units may also be provided in some embodiments of the present disclosure, in which at least two solar energy utilization units as shown in any of the above embodiments may be included and combined for use to improve the concentration and utilization efficiency of sunlight.

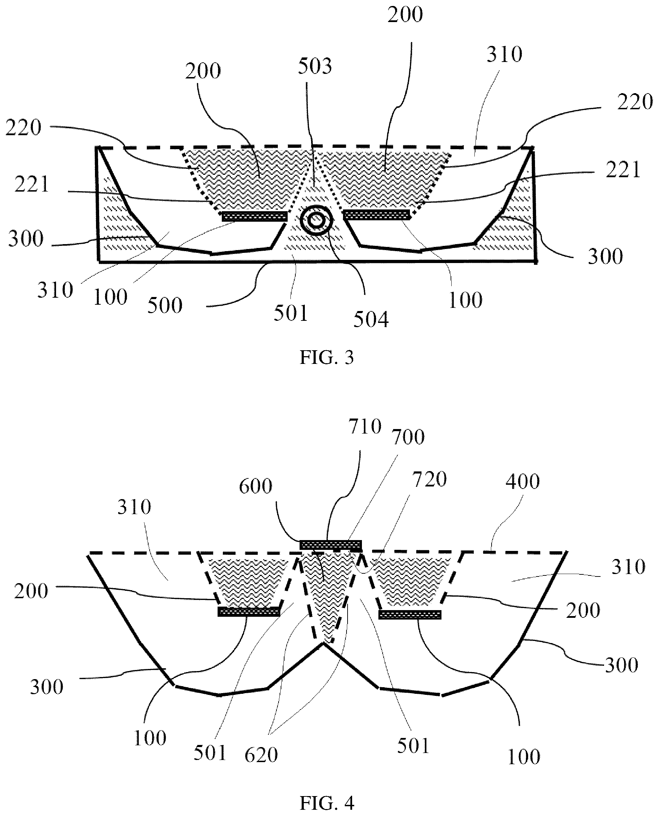

As shown in FIG. 2 and FIG. 3, in some embodiments, the solar energy utilization units may be arranged side by side; and a cavity 501, in which a thermal utilization working medium 503, a charging battery and/or a control circuit board may be arranged, may be formed between adjacent solar energy utilization units. The thermal utilization working medium 503 may not only be used for heat conversion and utilization, but also for cooling the solar energy utilization unit, improving the conversion efficiency of the solar energy utilization unit.

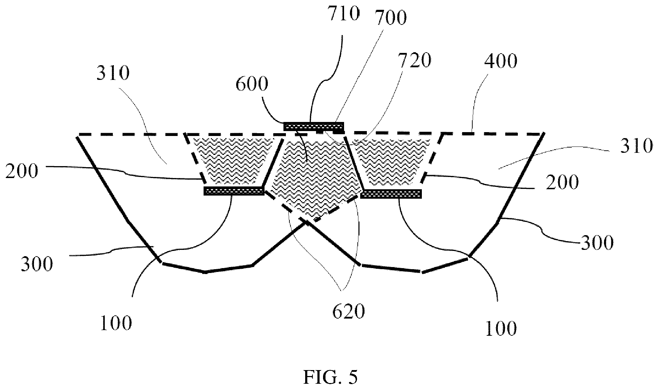

As shown in FIG. 4 and FIG. 5, in some embodiments, the solar energy utilization units may be arranged side by side; and the reflection structures of at least two adjacent solar energy utilization units may be connected, forming a cavity 501 together with two adjacent liquid light concentration members 200. The cavity 501 may be provided with a second liquid light concentration member 600 and a second light energy utilization member 700. The second light energy utilization member 700 may have the same structure as the aforementioned light energy utilization member 100. The second light energy utilization member 700 may have a first light energy utilization portion 710 and a second light energy utilization portion 720 that are arranged apart from each other. The first light energy utilization portion 710 of the second light energy utilization member 700 may be arranged upwards to receive sunlight from above transmitted thereto. The structure of the second liquid light concentration member 600 may be the same as that of the liquid light concentration member 200 mentioned above, but it is possible to choose which walls of the cavity are transparent and which are non-transparent according to actual effect. The second liquid light concentration member 600 may be arranged below the second light energy utilization member 700, and the second light energy utilization portion 720 of the second light energy utilization member 700 may be faced towards the second liquid light concentration member 600 or served as the wall of the second liquid light concentration member 600 to receive sunlight collected from the second liquid light concentration member 600. A second liquid light concentration member 600 and a second light energy utilization member 700 may be additionally provided between adjacent solar energy utilization units to concentrate and utilize more sunlight, resulting in higher light utilization efficiency of the entire combined formation.

In the embodiments shown in FIG. 4 and FIG. 5, the cavity 501 may be a closed cavity 501. The second liquid light concentration member 600 may adopt any feasible shape and structure. For example, in some embodiments, the second liquid light concentration member 600 may be wide at the top and narrow at the bottom (such as that shown in FIG. 4); and the narrow lower part of the second liquid light concentration member 600 may be connected to the reflection structures 300 of two adjacent solar energy utilization units so as to form respective light reflection chambers 310 together with the two adjacent solar energy utilization units.

Referring to FIG. 4, in some embodiments, there is a gap between the wall of the second liquid light concentration member 600 and the adjacent liquid light concentration members 200 on both sides thereof so as to extend the region of the light reflection chamber 310 to the gap to allow sunlight to be reflected onto the second liquid light concentration member 600.

At this time, in order to receive sunlight transmitted from the light reflection chamber 310, the wall 620 of the second liquid light concentration member 600 facing the liquid light concentration member 200 on both sides thereof may be at least partially transparent in some embodiments.

In some embodiments, the second liquid light concentration member 600 and the adjacent liquid light concentration members 200 on both sides thereof may share a wall or their walls may be coincided (such as that shown in FIG. 5), wherein the shared or coincided wall may be a transparent wall or a double-sided reflective wall.

At this time, in order to receive sunlight transmitted from the light reflection chamber 310, in some embodiments, the walls 620 of the second liquid light concentration member 600 may form light reflection chambers 310 respectively together with the solar energy utilization units on both sides thereof, and at least part of the wall 620 of the second liquid light concentration member 600 facing the light reflection chamber 310 may be a transparent wall.

Referring to FIG. 5, in some embodiments, the second liquid light concentration member 600 may be in a structure with an inverted pentagonal vertical section. With the inverted pentagonal structure, the height of the combined formation, as well as the temperature of the light energy utilization member 100, may be reduced significantly.

In some embodiments, to transfer and utilize thermal energy while dissipating heat, the second liquid light concentration member 600 may be connected to the reflection structures 300 of the solar energy utilization units on both sides thereof may be communicated through thermal conduction.

In some embodiments, the liquid light concentration members 200 of the adjacent solar energy utilization units may be separated from each other to form independent cavities or be connected into one cavity.

Based on the above inventive concept, several different embodiments are further described below to better illustrate the inventive concept.

### Example 1:

Referring to FIG. 1, a solar energy utilization unit C of the embodiment is disclosed. FIG. 1 schematically shows the vertical section of the solar energy utilization unit C. The vertical and horizontal directions mentioned in this embodiment and other embodiments are based on the direction of the illustration. Due to the possible adjustment of the direction of the solar energy utilization apparatus based on terrains and latitudes and longitudes during actual applications, the direction of the illustration may be different from an actual placement position of the solar energy utilization apparatus during an actual application.

The solar energy utilization unit C may include a light energy utilization member 100, a liquid light concentration member 200, a reflection structure 300 and a transparent cover plate 400 (which may be omitted). The liquid light concentration member 200 may be a closed structure, forming a closed accommodating chamber in which transparent liquid 201 is filled. The liquid light concentration member 200 may have a transparent top wall 210, a transparent side wall 220 and a transparent bottom wall 230. The dashed line in the figure indicates that the wall is a transparent surface.

The light energy utilization member 100 may be arranged below the liquid light concentration member 200, and may have a first light energy utilization portion 110 and a second light energy utilization portion 120 that are capable of receiving, converting and utilizing sunlight. The first light energy utilization portion 110 may face upwards, and the second light energy utilization portion 120 may face downwards. The first light energy utilization portion 110 may be attached to the transparent bottom wall 220 of the liquid light concentration member 200, so that sunlight can be transmitted through the transparent bottom wall 220 onto the first light energy utilization portion 110. In the figure, since the transparent bottom wall 220 is closely attached to the first light energy utilization portion 110, they are illustrated together.

Of course, in other embodiments, the first light energy utilization portion 110 of the light energy utilization member 100 may be served as the bottom wall of the liquid light concentration member 200, so there is no need to additionally provide a transparent bottom wall 220. Alternatively, the first light energy utilization portion 110 of the light energy utilization member 100 may also be arranged in the accommodating chamber of the liquid light concentration member 200.

Referring to FIG. 1, the reflection structure 300 is arranged on the outside and bottom of the strip-like liquid light concentration member 200, and a light reflection chamber 310 is formed among the reflection structure 300, the liquid light concentration member 200 and the second light energy utilization portion 120. The light reflection chamber 310 may have a light inlet that allows sunlight enters the reflection structure 300 of the light reflection chamber 310. The reflection structure 300 may reflect a portion of the sunlight entered the light reflection chamber 310 onto the second light energy utilization portion 120, and reflect a portion of the sunlight entered the light reflection chamber 310 onto the transparent side wall 220 of the liquid light concentration member 200 and then into the liquid light concentration member 200. Specifically, a gap is left between the reflection structure 300 and the strip-like liquid light concentration member 200, forming the light inlet of the light reflection chamber 310.

Please continue to refer to FIG. 1, in some more specific embodiments, the reflection structure 300 may be of groove like structure. The groove like structure may have an internal reflective surface to reflect sunlight onto the second light energy utilization portion 120. One side wall of the groove like structure may coincide with one transparent side wall 220 of the strip-like liquid light concentration member 200 (the two may be overlapped or may share the same wall), and the side wall on the other opposite side may be separated from the reflection structure 300. For example, the right side wall of the reflection structure 300 may be connected to the transparent side wall 220 on the right side of the figure, and the left side wall may be separated from the strip-like liquid light concentration member 200 on the left side of the figure, leaving a light inlet for the reflection structure 300 to allow sunlight to enter.

FIG. 1 shows the convergence of two types of incident light L1 and L2. A first may involve a process in which the incident light L1 is refracted by the transparent top wall 210 of the strip-like liquid light concentration member 200 and then fully reflected through the transparent side wall 220 onto the first light energy utilization portion 110. That is, the concentration effect can be achieved by fully utilizing the refraction and total reflection of the transparent liquid 201 in the liquid light concentration member 200. That is to say, the transparent side wall 210 may have two functions at the same time: one is to transmit incident light from the outside through a surface or to transmit light from the transparent liquid 201 to the reflection structure 300; and the other one is to fully reflect light from the transparent liquid 201 through a surface. The incident light L2 may be reflected from the side of the reflection structure 300, and then reflected from the bottom of the reflection structure 300 onto the second light energy utilization portion 120. Meanwhile, the transparent liquid 201 can also be used to cool or absorb heat from the light energy utilization member 100, improving the light energy utilization efficiency of the light energy utilization member 100.

In some embodiments, to extend and expand the receiving range of sunlight for the entire unit, the light energy utilization member 100, the liquid light concentration member 200 and the reflection structure 300 may extended in the same direction (i.e. perpendicular to the horizontal direction in the plane in which FIG. 1 located) to form a strip like structure. FIG. 1 shows a vertical section of the structure at a certain point in its extension direction. Of course, the unit can also be designed as a neat structure, for example, the vertical section at any point in the extension direction of the unit is in the shape shown in FIG. 1.

Referring to FIG. 1, the transparent cover plate 400 may connect the reflection structure 300 into a closed structure to prevent dust and snow.

This embodiment can be used for scene where the inclination of light is relatively large, for example, it may be installed vertically or horizontally in high latitude areas.

### Example 2:

Referring to FIG. 2, a combined formation formed by the solar energy utilization units is disclosed in this embodiment. FIG. 2 schematically shows the vertical section of the combined formation. FIG. 2 shows a case in which two solar energy utilization units are used together.

In this combined formation, the solar energy utilization units are arranged side by side, and a cavity 501 in which thermal utilization working medium 503 (such as water) is provided is formed between adjacent solar energy utilization units. The cavity 501 may be provided with a flow pipeline 504 of a thermal utilization working medium for heat exchange with the outside. In addition, the cavity 501 may also be used to receive a charging battery and/or a control circuit board, making the entire combined formation more compact in appearance.

Referring to FIG. 2, the cavity 501 between the two adjacent solar energy utilization units may be roughly in a Δ shape (which is only an example, and the cavity 501 may be designed in various feasible shapes, such as shown in FIGs. 3-5). A closure member 500 may be arranged at the bottom of the cavity 501 to seal the cavity 501. The closure member 500 may be cooperated with the reflection structures 300 of the solar energy utilization units on both sides to jointly enclose the cavity 501.

In some embodiments, to obtain a higher concentration ratio, the opposite walls of the liquid light concentration members 200 of the two solar energy utilization units (e.g. side walls 220') may be provided with a single-sided or double-sided reflective surface to prevent the sunlight inside the liquid light concentration member 200 from transmitting from the walls to the outer side of the liquid light concentration member 200.

Furthermore, in some embodiments, to extend and expand the receiving range of sunlight for the entire unit, the light energy utilization member 100, the liquid light concentration member 200 and the reflection structure 300 may be extended along the same direction (i.e. perpendicular to the horizontal direction in the plane in which FIG. 2 located) to form a strip like structure. FIG. 2 shows a vertical section of the structure at a certain point in its extension direction. Of course, the unit can also be designed as a neat structure, for example, the vertical section at any point in the extension direction of the unit is in the shape shown in FIG. 2.

### Example 3:

As shown in FIG. 3, a combined formation formed by the solar energy utilization units is shown in this embodiment. The combined formation may include at least two of the solar energy utilization units as shown in any embodiment mentioned above.

In this embodiment, the transparent side wall 220 arranged on the outer side of the liquid light concentration member 200 (near the reflection structure 300) is a folded surface, and the part 221 thereof near the transparent bottom wall has a different oblique angle compared to other parts and is flatter. In other embodiments, the part 221 may also be steeper. Such design is to configure the various parts on the transparent side wall 220 to different tilt angles, for example, the transparent side wall 220 may have at least two regions with different oblique angles, so that a part of the light in the liquid light concentration member 200 may be refracted by the transparent side wall 220 to the reflection structure 300 and then converged by the reflection structure 300 onto the second light energy utilization portion 120 of the light energy utilization member 100, and the other part of the light may be concentrated onto the first light energy utilization portion 110 of the light energy utilization member 100 in a total reflection manner by the transparent side wall 220.

In this embodiment, the opposite transparent side walls 220 of the two liquid light concentration members 200 are both flat. In other embodiments, the two transparent side walls 220 may be folded or curved surfaces.

There is a cavity 501 between two solar energy utilization units, which may be a region between adjacent reflection structures 300 or other structures. The cavity 501 may be a high-temperature region when it is shined by sunlight, so thermal energy may be utilized here.

Referring to FIG. 3, in this embodiment, two solar energy utilization units are arranged side by side in a mirroring manner (or they may be in a non-mirroring manner in other embodiments); and a cavity 501 may be formed between the reflection structure 300 of adjacent solar energy utilization units and may enclosed by a larger closure member 500. There may be a thermal utilization working medium 503 arranged in the cavity 501 to transfer thermal energy. The cavity 501 may also be provided with a flow pipeline 504 for the thermal utilization working medium to exchange heat with the outside.

In some embodiments, the thermal utilization working medium 503 may be cold water. The combined formation in this embodiment may provide hot water for thermal energy utilization while generating electricity.

### Example 4:

As shown in FIG. 4, a combined formation formed by two solar energy utilization units C and C' is shown in this embodiment.

Referring to FIG. 4, the difference between this embodiment and the Example 4 is that the reflection structures 300 of at least two adjacent solar energy utilization units are connected and enclosed to form a cavity 501 together with two adjacent liquid light concentration members 200. The cavity 501 may be provided with the second liquid light concentration member 600 and the second light energy utilization member 700. The second light energy utilization member 700 may have the same structure as the aforesaid light energy utilization member 100. The first light energy utilization portion 110 of the second light energy utilization member 700 may be arranged upwards so as to receive sunlight transmitted thereto. The second liquid light concentration member 600 may be arranged below the second light energy utilization member 700, the second light energy utilization portion 720 of the second light energy utilization member 700 may face the second liquid light concentration member 600 or serve as the wall of the second liquid light concentration member 600, so as to receive sunlight concentrated from the second liquid light concentration member 600, which can concentrate and utilize more sunlight, making the light utilization efficiency of the entire combined formation higher.

In FIG. 4, the second liquid light concentration member 600 is a structure with a vertical section of an inverted triangle, which has two transparent side walls 620. A second light energy utilization member 700 is arranged at the top of the inverted-triangle second liquid light concentration member 600. This inverted-triangle liquid light concentration member 200 can significantly reduce the height of the combined formation.

In some embodiments, two liquid light concentration members 200 and the second liquid light concentration member 600 may be integrated together through an integrated molding method. Alternatively, they may be manufactured separately and reassembled together.

In some embodiments, the reflection structures 300 of two liquid light concentration members 200 may also be integrated together through an integrated molding method. Alternatively, they may be manufactured separately and reassembled together.

In this embodiment, the side walls of the two liquid light concentration members 200 facing the second liquid light concentration member 600 may be the transparent side walls 220. In other embodiments, a part of the side walls may also be configured as double-sided reflective surface.

In some embodiments, the inverted-triangle second liquid light concentration member 600 may thermally contact with the reflection structure 300 to reduce the temperature of the transparent liquid 201 in the two liquid light concentration members 200 and the light energy utilization member 100.

### Example 5:

As shown in FIG. 5, a combined formation formed by two solar energy utilization units may be shown in this embodiment.

Referring to FIG. 5, the difference between this embodiment and the Example 4 is that a second liquid light concentration member 600 with a vertical section of an inverted pentagon, which has two transparent side walls 620, is arranged between two liquid light concentration members 200. A second light energy utilization member 700 may be arranged on the top of the second liquid light concentration member 600. This pentagonal second liquid light concentration member 600 can significantly reduce the height of the combined formation.

In addition, in this embodiment, the two liquid light concentration members 200 and the second liquid light concentration member 600 share a wall, or their walls are coincided. The side walls of the two liquid light concentration members 200 facing the second liquid light concentration member 600 (i.e. the shared wall or the coincided wall) may provide with a double-sided reflective surface. When there is the coincided walls, it may be transparent or double-sided reflective. When the coincided wall is transparent, and the second liquid light concentration member and the first liquid light concentration member are provided with the same transparent liquid, the coincided wall can be naturally eliminated to reduce costs.

In some embodiments, the two liquid light concentration members 200 and the second liquid light concentration member 600 may also be integrated together through an integrated molding method. Alternatively, they may be manufactured separately and reassembled together.

Similarly, the reflection structures 300 of the two liquid light concentration members 200 may also be integrated together through an integrated molding method. Alternatively, they can be manufactured separately and then assembled together.

In some embodiments, the second liquid light concentration member 600 may be in thermal contact with the reflection structure 300 for heat dissipation and thermal conduction utilization.

Here, the pentagon is just a rough shape. Due to the need for thermal contact, deformation of water pressure, or other considerations, the second liquid light concentration member 600 may also be of any other polygon.

The above specific examples are set forth to aid in understanding the present disclosure and are not intended to limit the present disclosure. Variations of those specific embodiments may become apparent to those skilled in the art in light of the teachings herein.

## Claims

1. A solar energy utilization unit, comprising:
a light energy utilization member having a first light energy utilization portion and a second light energy utilization portion that are arranged opposite to each other and are capable of receiving, converting and utilizing sunlight;
a liquid light concentration member having an accommodating chamber that is filled with transparent liquid and has a transparent wall through which the sunlight is allowed to be transmitted into the transparent liquid, the light energy utilization member being arranged inside or outside the accommodating chamber, or formed as a wall of the accommodating chamber, the first light energy utilization portion being arranged and faced towards the liquid light concentration member or the transparent liquid, and the liquid light concentration member forming a structure capable of transmitting and/or fully reflecting the sunlight to the first light energy utilization portion; and
a reflection structure, wherein a light inlet is left between the reflection structure and the liquid light concentration member for the sunlight to enter, a light reflection chamber is formed among the reflection structure, the second light energy utilization portion and the liquid light concentration member, the light inlet is communicated with the light reflection chamber, and the reflection structure is capable of reflecting the sunlight entered into the light reflection chamber onto the second light energy utilization portion.

2. The solar energy utilization unit according to claim 1, wherein the light reflection chamber is arranged on at least one side of the liquid light concentration member and the light energy utilization member and below the second light energy utilization portion.

3. The solar energy utilization unit according to claim 1, wherein the reflection structure is a groove like structure in which the light energy utilization member and the liquid light concentration member are arranged, and the groove like structure has an internal reflective surface for reflecting sunlight onto the second light energy utilization portion.

4. The solar energy utilization unit according to claim 3, wherein a side wall of the groove like structure is coincided with a portion of a wall of the liquid light concentration member, and a side wall on the opposite side is separated from the liquid light concentration member to form the light reflection chamber.

5. The solar energy utilization unit according to claim 4, wherein the portion of the wall is a transparent wall.

6. The solar energy utilization unit according to claim 3, wherein two opposite side walls of the groove like structure are separated from the liquid light concentration member to form the light reflection chamber.

7. The solar energy utilization unit according to any one of claims 1-6, wherein the wall of the liquid light concentration member facing the light reflection chamber is a transparent wall, a single-sided reflection wall, or a double-sided reflection wall.

8. The solar energy utilization unit according to any one of claims 1-7, wherein the liquid light concentration member is a structure with a wide top and a narrow bottom, and at least of its top wall is a transparent wall so that the sunlight is allowed to be transmitted from the top wall into the transparent liquid.

9. The solar energy utilization unit according to any one of claims 1-8, further comprising a transparent cover plate, wherein the transparent cover plate, the reflection structure and/or the liquid light concentration member form a closed structure in which the light energy utilization member is arranged.

10. The solar energy utilization unit according to any one of claims 1-9, wherein the light energy utilization member, the liquid light concentration member and the reflection structure are extended along a same direction, forming a strip like structure.

11. A combined formation formed by solar energy utilization units, comprising at least two of the solar energy utilization units according to any one of claims 1-10.

12. The combined formation according to claim 11, wherein the solar energy utilization units are arranged side by side, a cavity is formed between adjacent solar energy utilization units, and the cavity is provided inside with a thermal utilization working medium, a charging battery and/or a control circuit board.

13. The combined formation according to claim 11, wherein the solar energy utilization units are arranged side by side, the reflection structures of at least two adjacent solar energy utilization units are connected and form a cavity together with at least two liquid light concentration members, the cavity is provided with a second liquid light concentration member and a second light energy utilization member, the second light energy utilization member has a first light energy utilization portion and a second light energy utilization portion that are arranged apart from each other, the first light energy utilization portion of the second light energy utilization member are arranged upwards to receive sunlight from above transmitted thereto, the second liquid light concentration member is arranged below the second light energy utilization member, the second light energy utilization portion of the second light energy utilization member faces the second liquid light concentration member or serves as a wall of the second liquid light concentration member, so as to receive sunlight concentrated from the second liquid light concentration member.

14. The combined formation according to claim 13, wherein the second liquid light concentration member is a structure with a wide top and a narrow bottom, and the narrow bottom portion of the second liquid light concentration member is connected to the reflection structures of two adjacent solar energy utilization units, so as to form their respective light reflection chambers together with the two adjacent solar energy utilization units.

15. The combined formation according to claim 14, wherein there is a gap left between the wall of the second liquid light concentration member and adjacent liquid light concentration members on both sides thereof, so as to extend a region of the light reflection chamber to the gap.

16. The combined formation according to claim 14 or 15, wherein the wall of the second liquid light concentration member facing towards the liquid light concentration members on both sides is at least partially a transparent wall.

17. The combined formation according to claim 13, wherein the second liquid light concentration member and adjacent liquid light concentration members on both sides thereof share a wall, or their walls are coincided, the shared or coincided wall is a transparent wall or a double-sided reflection wall.

18. The combined formation according to claim 13, wherein the wall of the second liquid light concentration member and the solar energy utilization units on both sides thereof form the light reflection chambers respectively, and at least a portion of the wall of the second liquid light concentration member facing the wall of the light reflection chambers is a transparent wall.

19. The combined formation according to claim 13, wherein the second liquid light concentration member and the reflection structures of the solar energy utilization unit on both sides thereof are communicated through thermal conduction.

20. The combined formation according to claim 11, wherein the liquid light concentration members of adjacent solar energy utilization units are separated from each other to form independent chambers or communicated to be one chamber.
